# EUROPÄISCHE PATENTSCHRIFT

(11) **EP 1 563 155 B1**
(45) Veröffentlichungstag und Bekanntmachung des Hinweises auf die Patenterteilung: **03.01.2007**
(21) Anmeldenummer: 02808113.1
(22) Anmeldetag: 13.11.2002
(51) Int. Cl.: E05F 1/10, E05F 3/16, A45C 13/34, F16F 1/02, F16F 7/08

(54) **KLAPPENSTÜTZE**
LEAF SUPPORT
SUPPORT DE CLAPET

(43) Veröffentlichungstag der Anmeldung: 17.08.2005
(73) Patentinhaber: KARL SIMON GmbH & Co. KG, 78733 Aichhalden (DE)
(72) Erfinder: BANTLE, Ulrich, 72186 Empfingen (DE)
(74) Vertreter: Fleck, Hermann-Joseph
(86) Internationale Anmeldenummer: PCT/EP2002/012686
(87) Internationale Veröffentlichungsnummer: WO 2004/044360

(56) Entgegenhaltungen:
- EP-A- 1 152 165
- US-A- 2 063 526
- US-A- 4 512 600
- US-A- 5 581 941

## Beschreibung

Die Erfindung betrifft eine Klappenstütze mit einer Stützvorrichtung, an der ein Halter und ein Wandhalter verstellbar befestigt sind, wobei die Stützvorrichtung einen Hohlprofilabschnitt aufweist, der einen Aufnahmeraum für ein Gleitstück umschließt, wobei das Gleitstück an seiner Außenkontur eine oder mehrere Gleitflächen aufweist, die an der Innenwandung des Hohlprofilabschnittes anliegen, und wobei die Stützvorrichtung eine Feder aufweist, gegen deren Federkraft das Gleitstück in dem Hohlprofilabschnitt verstellbar ist, wobei aus dem Hohlprofilabschnitt ein schlitzförmiger Durchbruch ausgespart ist, der Zugang zu dem Gleitstück schafft, wobei das Gleitstück in seinen Werkstück-Maßtoleranzen derart dimensioniert ist, das die Gleitflächen des Gleitstückes mit Übermaß an der Innenwandung des Hohlprofilabschnittes anliegen und wobei an das Gleitstück ein Verbinder angeschlossen und durch den Durchbruch hindurchgeführt ist, dass der Verbinder außerhalb des Innenraumes des Hohlprofilabschnittes an den Wandhalter angeschlossen ist.

Eine derartige Hochstellstütze beziehungsweise Klappenstütze ist aus der DE 199 50 970 A1 bekannt. Hierbei ist eine Stützvorrichtung verwendet, die mittels eines Wandhalters an die Rückwand einer Truhe angeschlossen ist. An die Truhe ist ein Deckel anscharniert, der' in seiner horizontalen Schließlage eine Truhenöffnung abdeckt. Der Deckel ist mittels eines Deckelhalters an ein Gleitstück der Stützvorrichtung angekoppelt. Das Gleitstück ist in einem tubusförmigen Hohlprofilabschnitt verschiebbar geführt. Die Verstellbewegung erfolgt dabei beim Schließen des Deckels gegen die Vorspannung einer Feder. Damit kann dann die Schließbewegung des Deckels abgefedert werden, so dass die Verletzungsgefahr verringert ist. Wenn nun die Federkraft nicht mehr ausreichend groß ist, so lässt sich das Gleitstück in dem Hohlprofilabschnitt derart verspannen, dass eine Bremswirkung entsteht. Hierzu weist das Gleitstück zwei gegeneinander verspreizbare Schenkel auf.

Diese können unter Zuhilfenahme einer Madenschraube gegeneinander verstellt und mehr oder weniger stark an die Innenwandung des Hohlprofilabschnittes angepresst werden Bei dieser Anordnung ist der Anwender der Klappenstütze gefordert. Er muss die technischen Zusammenhänge hinsichtlich der Einstellbarkeit des Gleitstückes und der damit erreichten Bremswirkung kennen. Es sind aber nicht immer in Privathaushalten die Fähigkeiten oder die Bereitschaft vorhanden, sich derart mit einem Möbel-Funktionsteil auseinander zu setzen.

Eine weitere Klappenstütze ist aus der EP 1 152 165 A1 bekannt. Diese bekannte Klappenstütze weist als Hohlprofilabschnitt einen Zylinder auf, in dem ein Kolben axial verstellbar geführt ist. Dabei ist der Kolben gegen die Vorspannung einer Spiralfeder vorgespannt gehalten. Die Spiralfeder ist auf die Kolbenstange aufgeschoben. Um die Bremswirkung zwischen der Außenseite der Kolbenstange und der Spiralfeder so gering wie möglich zu halten, ist die Spiralfeder mit einer reibungsvermindemden Beschichtung versehen.

Es ist Aufgabe der Erfindung, bei einer Klappenstütze der eingangs erwähnten Art die Geräuscheentwicklung zu verringern und die Montage zu vereinfachen.

Diese Aufgabe wird dadurch gelöst, dass die Feder zumindest bereichsweise an ihrer Außenfläche mit einer reibungsvermindemden Beschichtung versehen ist, und dass der Verbinder mittels eines Rastelementes mit dem Gleitstück verrastet ist.

Dadurch, dass der Verbinder mittels eines Rastelementes mit dem Gleitstück verrastet ist, ist die Montage der Klappenstütze deutlich vereinfacht.

Dadurch, dass eine Übermaßpassung zwischen dem Gleitstück und dem Hohlprofilabschnitt erzeugt wird, kann eine Bremswirkung in die Stützvorrichtung eingebracht werden. Der Anwender muss dabei keine eigenen Einstellarbeiten vornehmen, so dass eine einfache und benutzerfreundliche Handhabung möglich ist. Die Bremswirkung des Gleitstückes behindert die Schließbewegung einer angeschlossenen Klappe oder eines Deckels in Schwerkraftrichtung. Beim Öffnen der Klappe oder des Deckels verhindert die Bremswirkung ein unkontrolliertes Aufschnappen der Klappe oder des Deckels. Die reibungsvermindernde Beschichtung der Feder sichert einen gleichmäßigen Bewegungsablauf. Insbesondere kann auch eine Geräuscheentwicklung im Übergangsbereich zwischen der Feder und dem Hohlprofilabschnitt verringert werden.

Gemäß einer bevorzugten Ausgestaltungsvariante der Erfindung kann es vorgesehen sein, dass das Gleitstück eine zylinderförmige Außenkontur aufweist, welche die Gleitfläche bildet, und dass das Gleitstück über seine gesamte Außenkontur im Übermaß an die Innenkontur des als Hohlzylinder ausgebildeten Hohlprofilabschnittes angepasst ist. Dabei ist dann das Gleitstück über seiner gesamten Außenkontur flächig angepresst. Auf diese Weise lässt sich gleichmäßig ein hohes Reibmoment erzeugen.

Eine kostengünstig fertigbare Ausgestaltung ergibt sich dann, wenn vorgesehen ist, dass der Wandhalter ein Anschlussblech eines Zapfens des Verbinders aufweist, und dass das Anschlussblech um den Durchbruch herum eine den Zapfen umfassende Ausstülpung aufweist. Der Zapfen kann mit der Ausstülpung beispielsweise verpresst sein.

Vorteilhafter Weise ist die Materialwahl so getroffen, dass zumindest die Gleitflächen des Gleitstückes aus und/oder und die Innenwandung des Hohlprofilabschnittes ein eingebrachtes Gleitmittel, insbesondere ein eingespritztes Teflonmaterial, aufweist. Damit ist verhindert, dass Reibgeräusche beim Betrieb auftreten. Weiterhin braucht kein separates Schmiermittel oder keine zusätzlichen Bauteile zur Erreichung dieses Vorteiles eingesetzt werden.

Eine Variante der Erfindung kann dadurch gekennzeichnet sein, dass das Gleitstück an den, an einer Seitenwand des Möbelkorpusses ankoppelbaren Wandhalter angebaut ist, dass an eine, um eine horizontale Schwenkachse aufschwenkbare Klappe der Halter angebaut ist, und dass der Halter an einem Ansatz des Gleitstückes schwenkbar befestigt ist.

Wenn vorgesehen ist, dass das in Folge der Bremskraft des Gleitstückes eingebrachte Reibmoment längs des Verschiebeweges des Gleitstückes variiert, dann lässt sich die Bremswirkung auf die unterschiedlichen Betriebsstellungen anpassen. Diese Variation lässt sich beispielsweise mittels Querschnittsvariationen verwirklichen.

Die Erfindung wird im Folgenden anhand eines in den Zeichnungen dargestellten Ausführungsbeispieles näher erläutert. Es zeigen:
- Fig 1: in Seitendarstellung einen Möbelkorpus mit einer Klappe und einer Stützvorrichtung, wobei die Klappe vollständig aufgeschwenkt ist,
- Fig. 2: die Darstellung gemäß Fig. 1, jedoch mit teilweise eingeschwenkter Klappe,
- Fig. 3: die Darstellung gemäß Fig. 1, jedoch mit vollständig geschlossener Klappe und
- Fig. 4: einen Vertikalschnitt durch die in den Fig. 1 bis 3 gezeigte Stützvorrichtung.

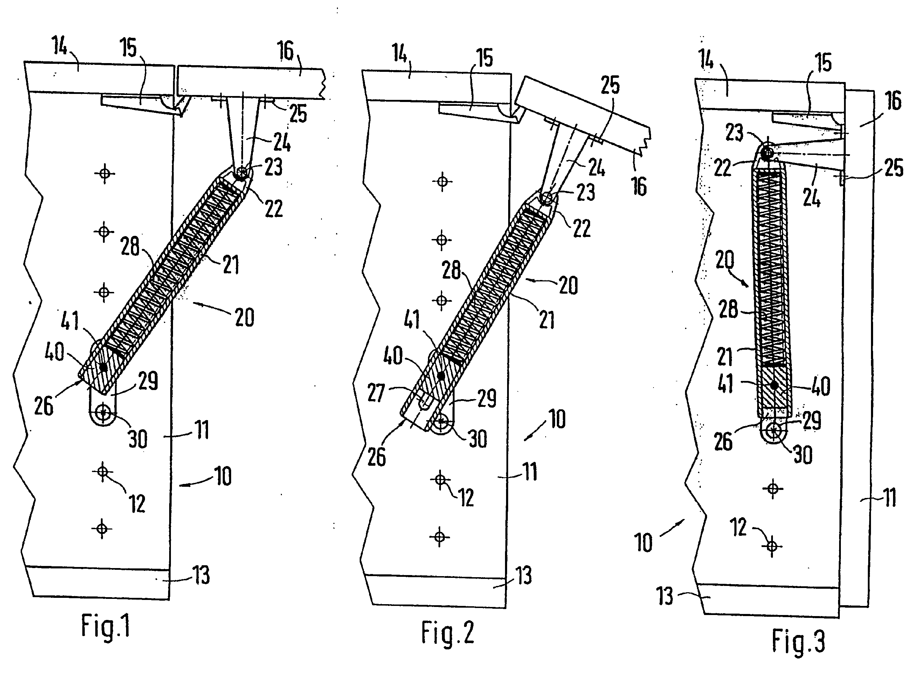

In den Fig. 1 bis 3 ist ein Möbelkorpus 10 gezeigt, der Seitenwände 11, einen horizontalen Boden 13 und einen Deckel 14 aufweist. An dem Deckel 14 ist über Scharniere 15 eine Klappe 16 angebaut. Die Scharniere 15 bilden eine horizontale Scharnierachse, um die die Klappe 16 verschwenkt werden kann. Der Möbelkorpus 10 kann beispielsweise ein Hängeschrank in einer Küche oder einen Wohnwagen beziehungsweise ein Camping-Mobil sein. Dabei besteht die Problematik, dass die Klappe 16 im aufgeschwenkten Zustand ausreichend sicher gehalten ist. Im geschlossenen Zustand darf die Klappe 16 nicht unbeabsichtigt aufschwenken. Um diese Funktionen zu erfüllen, wird eine Stützvorrichtung 20 verwendet. Die Stützvorrichtung 20 weist einen Hohlprofilabschnitt 21 auf, der in Form einer einseitig geöffneten tubusförmigen Röhre ausgebildet ist. Der Hohlprofilabschnitt 21 weist an seinem geschlossenen Ende einen Ansatz 22 auf. An diesem Ansatz 22 kann ein Halter 24 befestigt werden. Der Halter 24 ist mit dem Ansatz 22 unter Verwendung eines Scharnierbolzens 23 gelenkig gelagert. Der Halter 24 dient zur Anbindung der Klappe 16 an der Stützvorrichtung 20. Der Halter 24 ist mittels einer Befestigungsplatte 25 auf der Innenseite der Klappe 16 fixiert. Von der Befestigungsplatte 25 ist ein Hebel abgebogen, der mit dem Ansatz 22 verbunden ist.

In dem von dem Hohlprofilabschnitt 21 umgebenen Innenraum ist eine Feder 28 eingesetzt. Die Feder 28 stützt sich einseitig an dem geschlossenen Ende des Hohlprofilabschnittes 21 ab. An dem anderen Ende ist die Feder 28 gegenüber einem Gleitstück 40 abgestützt. Das Gleitstück 40 ist durch die, am offenen Ende des Hohlprofilabschnittes 21 gebildete Öffnung 26 eingeführt. Zur Fixierung des Gleitstückes 40 an dem Möbelkorpus 10 ist ein Wandhalter 29 verwendet. Der Wandhalter 29 ist mittels Befestigungsschrauben 30 mit einer Systemlochung 12 des Möbelkorpusses verschraubt. Die Systemlochung 12 ist in bekannter Weise in die Seitenwand 11 des Möbelkorpusses 10 eingebracht. Sie weist eine Reihe von zueinander in gleichmäßiger Teilung beabstandete Befestigungsaufnahmen 29.1 auf.

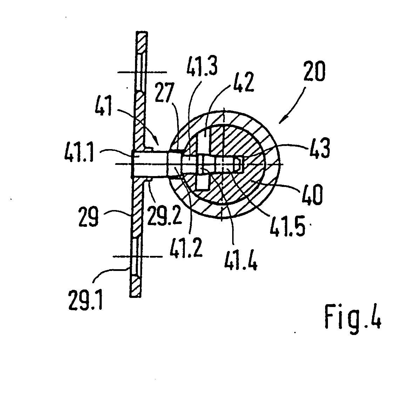

Die detaillierte Ausgestaltung des Wandhalters 29 lässt sich der Fig. 4 entnehmen. Wie diese Darstellung zeigt, besitzt der Wandhalter 29 eine Befestigungsplatte, aus der zwei Befestigungsaufnahmen 29.1 ausgespart sind. Durch diese Befestigungsaufnahmen 29.1 können die Befestigungsschrauben 30 durchgeführt und in den Möbelkorpus 10 eingeschraubt werden. Die Befestigungsplatte 25 weist einen Durchbruch auf, der vorliegend zentrisch angeordnet ist und der von einer Austülpung 29.2 umgeben ist. Die Ausstülpung 29.2 bildet zusammen mit dem Durchbruch 27 eine Zylinderaufnahme, in die ein Verbinder 41 eingesetzt werden kann.

Hierzu weist der Verbinder 41 einen zylindrischen Zapfen 41,1 auf, der in den Durchbruch 27 beziehungsweise die Ausstülpung 29.2 eingepresst ist. An den Zapfen 41.1 schließt sich ein Bund 41.2 an. Mit diesem Bund 41.2 ist der Verbinder 41 durch einen schlitzförmigen Durchbruch 27 des Hohlprofilabschnittes 21 hindurchgeführt. Im Anschluss an den Bund 41.2 weist der Verbinder 41 einen Zwischenabschnitt 41.3 auf, an den ein Rastelement 41.4 angeschlossen ist. Der Verbinder 41 läuft in einem Endstück 41.5 aus, das in eine Bohrung 43 des Gleitstückes 40 eingesetzt ist. Die Bohrung 43 ist quer zur Mittellängsachse in das Gleitstück 40 eingebracht. Die Bohrung 43 ist von einem Schlitz 42 geschnitten. Somit ergibt sich in dem Gleitstück 40 ein Hinterschnitt, der von dem Rastelement 41.4 des Verbinders 41 hintergriffen ist. Das Endstück 41.5 und der Zwischenabschnitt 41.3 bilden eine Drehlagerung, um die der Hohlprofilabschnitt 21 zusammen mit dem Verbinder 41 verschwenkt werden kann. Zur Montage der Stützvorrichtung 20 wird zunächst die Feder 28 in den Hohlprofilabschnitt 21 eingesetzt. Anschließend wird das Gleitstück 40 durch die Öffnung 26 des Hohlprofilabschnittes 21 eingesetzt, so dass die Bohrung 43 des Gleitstückes in Flucht zu dem Durchbruch 27 des Hohlprofilabschnittes 21 steht. In dieser Position ist das Gleitstück 40 mittels eines Rastansatzes, der in den Duchbruch 27 eingreift vorfixiert. Zur Endmontage kann der Wandhalter 29 mit seinem Verbinder 41 in die Bohrung 43 eingesetzt werden. Der Anwender kann dann den Wandhalter 29 unabhängig von der Stützvorrichtung 20 montieren.

Wie sich aus den Fig. 1 bis 3 erkennen lässt, kann in Folge der Variation der Anbauposition des Wandhalters 29 in der Systemlochung 12 auch eine Veränderung des Schwenkwinkels der Klappe 16 erzeugt werden.

Im Folgenden soll kurz eine Kräftebetrachung angestellt werden, um die Funktionsweise der Stützvorrichtung 20 näher zu erläutern:

Damit die Klappe 16 von der in der Fig. 1 dargestellten Öffnungslage in den Schließzustand gem. Fig. 3 überführen zu können, muss eine Kraft in die Klappe 16 eingebracht werden. Mit dieser Kraft muss additiv sowohl die Federkraft als auch die Bremskraft des Gleitstückes 40 überwunden werden.

Wenn nun die Klappe 16 aus der geschlossenen Position in die geöffnete Position bewegt werden soll, so ist wiederum die Einbringung einer Kraft erforderlich, um die in Fig. 3 dargestellte Totpunktlage zu überwinden. Anschließend unterstützt die Kraft der Feder 28 die Öffenbewegung der Stützvorrichtung 20.

Die durch das Gleitstück 40 eingebrachte Bremskraft jedoch wirkt entgegengesetzt der Öffenbewegung der Klappe 16. Hiermit wird erreicht, dass die Klappe 16 nicht unkontrolliert unter Einwirkung der Federkraft aufschnappt.

Die Bremskraft wird dazu verwendet, die Klappe 16 trotz sich verändernden Schließmomentes während des Öffnens im Gleichgewicht mit der jeweiligen Federkraft zu halten. Dadurch bleibt die Klappe 16 in einem Bereich von ca. 45 ° bis 90° in der jeweiligen Stellung, in der keine Handkraft eingebracht wird, stehen.

## Patentansprüche

1. Klappenstütze mit einer Stützvorrichtung, an der ein Halter und ein Wandhalter (29) verstellbar befestigt sind, wobei die Stützvorrichtung einen-Hohlprofilabschnitt (21) aufweist, der einen Aufnahmeraum für ein Gleitstück (40) umschließt, wobei das Gleitstück (40) an seiner Außenkontur eine oder mehrere Gleitflächen aufweist, die an der Innenwandung des Hohlprofilabschnittes (21) anliegen, und wobei die Stützvorrichtung eine Feder (28) aufweist, gegen deren Federkraft das Gleitstück (40) in dem Hohlprofilabschnitt (21) verstellbar ist, wobei aus dem Hohlprofilabschnitt (21) ein schlitzförmiger Durchbruch (27) ausgespart ist, der Zugang zu dem Gleitstück (40) schafft, wobei das Gleitstück (40) in seinen Werkstück-Maßtoleranzen derart dimensioniert ist, das die Gleitflächen des Gleitstückes (40) mit Übermaß an der Innenwandung des Hohlprofilabschnittes (21) anliegen, und wobei an das Gleitstück (40) ein Verbinder (41) angeschlossen und durch den Durchbruch (27) hindurchgeführt ist, und der Verbinder (41) außerhalb des Innenraumes des Hohlprofilabschnittes (21) an den Wandhalter (29) angeschlossen ist,
**dadurch gekennzeichnet,**
**dass** die Feder (28) zumindest bereichsweise an ihrer Außenfläche mit einer reibungsvermindemden Beschichtung versehen ist und
**dass** der Verbinder (41) mittels eines Rastelementes (41.4) mit dem Gleitstück (40) verrastet ist.

2. Klappenstütze nach Anspruch 1,
**dadurch gekennzeichnet,**
**dass** das Gleitstück (40) eine zylinderförmige Außenkontur aufweist, welche die Gleitfläche bildet, und
**dass** das Gleitstück (40) über seine gesamte Außenkontur mit Übermaß an die Innenkontur des als Hohlzylinder ausgebildeten Hohlprofilabschnittes (21) angepasst ist.

3. Klapppenstützen nach Anspruch 1 oder 2,
**dadurch gekennzeichnet,**
**dass** der Verbinder (51) in dem Gleitstück (40) dreh- oder schwenkbar gehalten ist.

4. Klappenstütze nach einem der Ansprüche 1 bis 3,
**dadurch gekennzeichnet,**
**dass** der Wandhalter (29) ein Anschlussblech für einen Zapfen (41.1) des Verbinders (41) aufweist, und
**dass** das Anschlussblech um den Durchbruch herum eine den Zapfen (41.4) umfassende Ausstülpung (29.2) aufweist.

5. Klappenstütze nach einem der Ansprüche 1 bis 4,
**dadurch gekennzeichnet,**
**dass** zumindest die Gleitflächen des Gleitstückes (40) oder die Innenwandung des Hohlprofilabschnittes (21) ein Gleitmittel enthält.

6. Klappenstütze nach Anspruch 5,
**dadurch gekennzeichnet,**
**dass** das Gleitstück (40) und/oder die Innenwandung des Hohlprofilabschnittes (21) aus Kunststoff mit eingebettetem Teflon besteht.

7. Klappenstütze nach einem der Ansprüche 1 bis 6,
**dadurch gekennzeichnet,**
**dass** das Gleitstück (40) an den, an einer Seitenwand (11) des Möbelkorpusses (10) ankoppelbaren Wandhalter (29) angebaut ist,
**dass** an eine, um eine horizontale Schwenkachse aufschwenkbare Klappe der Halter (24) angebaut ist, und
**dass** der Halter (24) an einem Ansatz (22) des Hohlprofilabschnittes (21) schwenkbar befestigt ist.

8. Klappenstütze nach einem der Ansprüche 1 bis 7,
**dadurch gekennzeichnet,**
**dass** das in Folge der Bremskraft des Gleitstückes (40) eingebrachte Reibmoment längs des Verschiebeweges des Gleitstückes variiert.

9. Klappenstütze nach einem der Ansprüche 1 bis 8,
**dadurch gekennzeichnet,**
**dass** das Gleitstück (40) mittels einer Rastverbindung axial verschiebbar, jedoch unverlierbar mit dem Hohlprofilabschnitt (21) verbunden ist.

10. Klappenstütze nach einem der Ansprüche 1 bis 9,
**dadurch gekennzeichnet,**
**dass** die Beschichtung der Feder (28) aus einer Nickelschicht, einer Wachsschicht oder einer Teflonschicht besteht.

## Claims

1. Leaf support comprising a supporting device, to which a retaining element and a wall retaining element (29) are adjustably fastened, the supporting device having a hollow profile portion (21), which encloses a receiving space for a sliding piece (40), the sliding piece (40) having on its outer contour one or more sliding surfaces, which lie against the inner wall of the hollow profile portion (21), and the supporting device having a spring (28), against the spring force of which the sliding piece (40) is adjustable in the hollow profile portion (21), a slot-shaped aperture (27) being provided in the hollow profile portion (21), affording access to the sliding piece (40), the sliding piece (40) being dimensioned in its workpiece tolerances in such a way that the sliding surfaces of the sliding piece (40) are oversized in relation to the inner wall of the hollow profile portion (21) when lying against the said wall, and a connector (41) being connected to the sliding piece (40) and led through the aperture (27) and the connector (41) being connected to the wall retaining element (29) outside the interior space of the hollow profile portion (21), **characterized in that** the spring (28) is provided on its outer surface, at least in certain regions, with a friction-reducing coating and **in that** the connector (41) is engaged with the sliding piece (40) by means of a latching element (41.4).

2. Leaf support according to Claim 1, **characterized in that** the sliding piece (40) has a cylindrical outer contour, which forms the sliding surface, and **in that** the sliding piece (40) is adapted over its entire outer contour to the inner contour of the hollow profile portion (21), formed as a hollow cylinder, such that it is oversized in relation to it.

3. Leaf support according to Claim 1 or 2, **characterized in that** the connector (41) is rotatably or pivotably retained in the sliding piece (40).

4. Leaf support according to one of Claims 1 to 3, **characterized in that** the wall retaining element (29) has a connecting plate for a pin (41.1) of the connector (41), and **in that** the connecting plate has around the aperture a protuberance (29.2) enclosing the pin (41.4).

5. Leaf support according to one of Claims 1 to 4, **characterized in that** at least the sliding surfaces of the sliding piece (40) or the inner wall of the hollow profile portion (21) contain(s) a sliding agent.

6. Leaf support according to Claim 5, **characterized in that** the sliding piece (40) and/or the inner wall of the hollow profile portion (21) consists of plastic with embedded Teflon.

7. Leaf support according to one of Claims 1 to 6, **characterized in that** the sliding piece (40) is attached to the wall retaining element (29), which can be coupled to a side wall (11) of the basic furniture structure (10), **in that** the retaining element (24) is attached to a leaf which can be pivoted up about a horizontal pivot axis, and **in that** the retaining element (24) is pivotably fastened to an extension (22) of the hollow profile portion (21).

8. Leaf support according to one of Claims 1 to 7, **characterized in that** the frictional torque introduced as a result of the braking force of the sliding piece (40) varies along the displacing path of the sliding piece.

9. Leaf support according to one of Claims 1 to 8, **characterized in that** the sliding piece (40) is connected to the hollow profile portion (21) in an axially displaceable but captive manner by means of a latching connection.

10. Leaf support according to one of Claims 1 to 9, **characterized in that** the coating of the spring (28) comprises a nickel layer, a wax layer or a Teflon layer.

## Revendications

1. Support de volet avec un dispositif de support sur lequel sont fixés, de manière réglable, une fixation et une fixation de paroi (29), le dispositif de support présentant une portion profilée creuse (21), qui entoure un espace de logement pour une pièce coulissante (40), la pièce coulissante (40) présentant au niveau de son contour extérieur une ou plusieurs surfaces de glissement, qui s'appliquent contre la paroi intérieure de la portion profilée creuse (21), et le dispositif de support présentant un ressort (28) à l'encontre de la force duquel la pièce coulissante (40) peut être déplacée dans la portion creuse profilée (21), un orifice (27) en forme de fente étant pratiqué dans la portion profilée creuse (21), lequel permet l'accès à la pièce coulissante (40), la pièce coulissante (40) étant dimensionnée en termes de tolérances dimensionnelles de pièce de telle sorte que les surfaces de glissement de la pièce coulissante (40) s'appliquent avec un surdimensionnement contre la paroi intérieure de la portion profilée creuse (21), et un organe de connexion (41) étant raccordé à la pièce coulissante (40) et étant guidé à travers l'orifice (27) et l'organe de connexion (41) étant raccordé en dehors de l'espace intérieur de la portion profilée creuse (21) à la fixation de paroi (29),
**caractérisé en ce que**
le ressort (28) est pourvu au moins en partie sur sa surface extérieure d'un revêtement réduisant les frottements et **en ce que** l'organe de connexion (41) est encliqueté avec la pièce coulissante (40) au moyen d'un élément d'encliquetage (41.4).

2. Support de volet selon la revendication 1,
**caractérisé en ce que**
la pièce coulissante (40) présente un contour extérieur cylindrique qui forme la surface coulissante, et
**en ce que** la pièce coulissante (40) est adaptée sur tout son contour extérieur, avec un surdimensionnement, au contour intérieur de la portion profilée creuse (21) réalisée sous forme de cylindre creux.

3. Support de volet selon la revendication 1 ou 2,
**caractérisé en ce que**
l'organe de connexion (51) est maintenu à rotation ou à pivotement dans la pièce coulissante (40).

4. Support de volet selon l'une quelconque des revendications 1 à 3,
**caractérisé en ce que**
la fixation de paroi (29) présente une tôle de raccordement pour un tourillon (41.1) de l'organe de connexion (41), et
**en ce que** la tôle de raccordement présente, tout autour de l'orifice, un renflement (29.2) entourant le tourillon (41.4).

5. Support de volet selon l'une quelconque des revendications 1 à 4,
**caractérisé en ce que**
au moins les surfaces de glissement de la pièce coulissante (40) ou la paroi intérieure de la portion profilée creuse (21) contiennent un lubrifiant.

6. Support de volet selon la revendication 5,
**caractérisé en ce que**
la pièce coulissante (40) et/ou la paroi intérieure de la portion profilée creuse (21) se compose de plastique avec du téflon incorporé.

7. Support de volet selon l'une quelconque des revendications 1 à 6,
**caractérisé en ce que**
la pièce coulissante (40) est montée sur la fixation de paroi (29) pouvant être accouplée à une paroi latérale (11) du corps de meuble (10),
**en ce que** la fixation (24) est montée sur un volet pouvant s'ouvrir par pivotement autour d'un axe de pivotement horizontal, et
**en ce que** la fixation (24) est fixée à pivotement sur une saillie (22) de la portion profilée creuse (21).

8. Support de volet selon l'une quelconque des revendications 1 à 7,
**caractérisé en ce que**
le couple de frottement introduit par suite de la force de freinage de la pièce coulissante (40) varie le long de la course de déplacement de la pièce coulissante.

9. Support de volet selon l'une quelconque des revendications 1 à 8,
**caractérisé en ce que**
la pièce coulissante (40) est connectée à la portion profilée creuse (21) de manière axialement déplaçable au moyen d'une connexion par encliquetage, mais toutefois de manière imperdable.

10. Support de volet selon l'une quelconque des revendications 1 à 9,
**caractérisé en ce que**
le revêtement du ressort (28) se compose d'une couche de nickel, d'une couche de cire ou d'une couche de téflon.
